# EUROPEAN PATENT SPECIFICATION

(11) **EP 2 583 731 B1**
(45) Date of publication and mention of the grant of the patent: **21.11.2018**
(21) Application number: 11796030.2
(22) Date of filing: 20.05.2011
(51) Int. Cl.: B01D 27/02, C02F 1/00

(54) **FILTER MODULE AND DEVICE FOR PURIFYING A LIQUID**
FILTERMODUL UND VORRICHTUNG ZUR REINIGUNG EINER FLÜSSIGKEIT
MODULE FILTRANT ET DISPOSITIF DE PURIFICATION DE LIQUIDE

(30) Priority: 15.06.2010 RU 2010124561
(43) Date of publication of application: 24.04.2013
(73) Proprietor: Electrophor, Inc., Woodmere NY 11598 (US)
(72) Inventor: SHMIDT, Joseph Lvovich, New York 10069 (US); RUSINOV, Gleb Dmitrievich, St.Petersburg 198302 (RU); KUZMIN, Alexey Leonidovich, St.Petersburg 198215 (RU)
(74) Representative: Rupprecht, Kay
(86) International application number: PCT/RU2011/000340
(87) International publication number: WO 2011/159196

(56) References cited:
- EP-A2- 0 285 908
- RU-C2- 2 353 421
- RU-C2- 2 383 382
- US-A- 5 049 272
- US-A- 5 637 214
- US-A1- 2005 051 494
- US-A1- 2009 057 220

## Description

### FIELD OF THE INVENTION

The invention relates to filter devices for purifying a liquid mainly drinking water, intended for using in the filters for purifying a liquid in household conditions, mainly in the jug-type filters and can find its application for purifying drinking water and other liquids for household application, in medicine and other industries.

### BACKGROUND OF THE INVENTION

The most known filter devices (modules) consist of the housing filled with a filter material and a cover. The cover has an opening for liquid to enter and opening for air to exit. One or more openings for the purified liquid to exit are designed in the bottom part of the housing. The filter module is put into the collecting vessel for the liquid to be purified. Liquid flows through the openings disposed in the cover and lower through the filter material. The purified liquid flows out through the opening (or the openings) in the bottom part of the housing into a vessel for the purified liquid.

US 5 637 214 A relates to a filter assembly for water treatment apparatus, wherein the filter comprises a lid with apertures to facilitate the passage of water therethrough, a filter housing with a filter bag filled with filter material and at the bottom of the housing, a frustoconical member extends upwardly and comprises a plurality of elongated slots. According to specification lower end of filtering module has an elongated cylindrical surface with a plurality of elongated slots tapered towards the filtering module bottom having simple plane configuration. The member serves only for retaining the bag with the filtering material.

US 2005/051494 A discloses water treatment cartridges which comprise a housing, an inlet, an outlet port at the bottom, a first and a second treatment material and a liquid-pervious retainer. The upper part of the housing is closed with a cover comprising said inlet. The retainer comprises a hollow cylindrical body and a conical end with openings. The filtering module bottom has a convex shape tapered towards the lower end and has in the center a rather big round outlet for purified water. The bottom is retained by a number of ribs. The member is replaceable and is designed to retain second filtering material inside the filtering module.

US 2009/057220 A relates to a filter assembly comprising a cartridge with a cup with the inserted filtering material and a lid. In one of the embodiments of the filtering module the bottom has slots disposed over the whole surface thereof, however the bottom itself is plane without any protrusions or edges. In another embodiment of the US 2009/057220 A the bottom portion of the filtering module is tapered towards the lower end. Side walls of bottom portion have openings which blend into the blind bottom of a simple configuration. Because of such structure of the bottom portion an air-pocket is formed there inside. When purified water gets inside the inner space of the bottom portion it shall overcome the resistance to airflow to flow outside the module, therefore the filtration flow rate decreases. The filtering material is placed in separate cartridge.

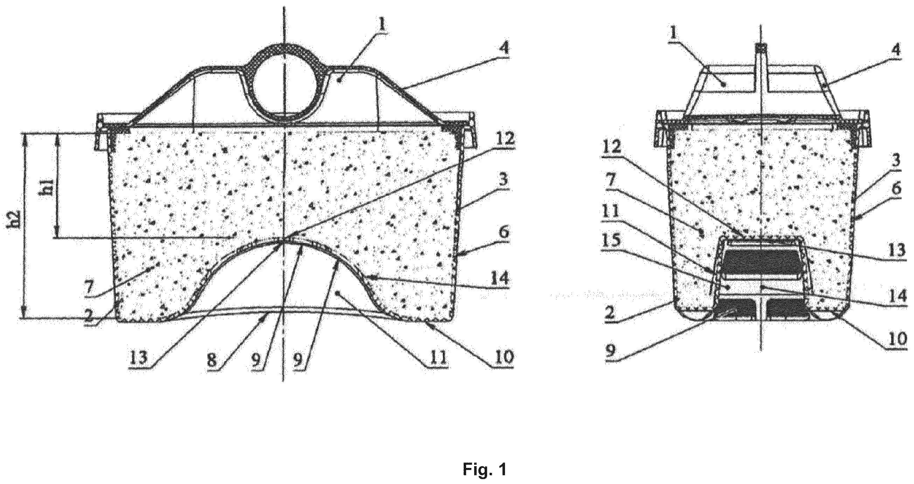

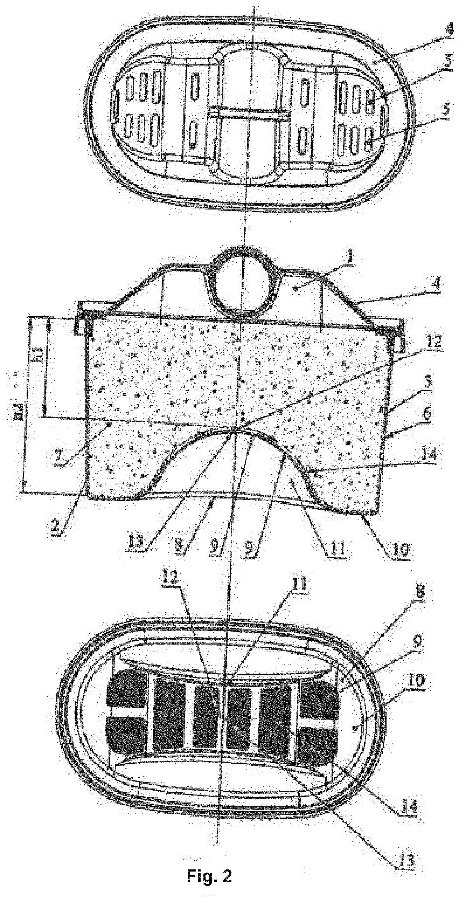

The known filter cartridge (1) according to the US patent No. 6099728, B01D 27/02, published 08.08.2000 filled with granulated filter material formed as an opened glass which can be closed with a cover having lateral walls (3) and a flat bottom (1) with outlet openings (2) disposed in its middle part and closed with the tissue insert (12) with a plastic frame (11). When manufacturing the cartridge by injection molding method, the tissue insert with a plastic frame are formed separately beforehand (page 2 of the invention description, Fig. 1, 2). Outlet openings disposed in the bottom of said cartridge have a limited flow area which leads to degradation of the performance, i.e. to decreasing filtration rate.

It have previously been proposed a filter cartridge and a device for filtering in which a receiving funnel has at least one first fixing means under the positioning opening, and a filter cartridge has under a seal collar and at a distance of it at least one second fixing means which interacts with the first fixing means in mounting the filter cartridge into the positioning opening. Fixing means are disposed in the area of the bottom housing part and present fixing projections and fixing hollows. For example, a rectangular hollow with a mandrel directed outwards is used as a fixing means on the bottom part of the filter cartridge, in the center of the bottom part. In this case, at least one outlet opening is disposed on the sides of the flat bottom part of the filter cartridge. Fixing means allow to provide a correct installation of the filter cartridge which can be determined by the user himself (International application PCT/WO 2005/118482, B01D 35/30, C02F 1/00, published 15.12.2005; RF patent No.2379088, B01D 35/30, C02F 1/00, published 20.01.2010; US application 2009/0294346, B01D 29/085, published 03.12.2009). The analogous constructive solutions of the filter cartridge having outlet openings disposed on the sides of its flat bottom part are described in the international application PCT/WO 2009/015679, C02F 1/00, published 05.02.2009 and in the application E 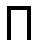 B No.2022760, C02F 1/00, published 11.02.2009.

Use in the described filter devices the outlet openings disposed on the sides of the flat bottom part (with or without stiffening ribs) leads to limitation of the liquid flowing area, i.e. to decreasing of filtration rate.

It was found, that the problem of providing the more uniform contact of water with the whole volume of filter material throughout the whole resource of the removable filter cartridge is connected with this constructive arrangement of the outlet openings in the lateral parts of the bottom. The problem consists in that an air can remain in the volume of filter material. This air entrapment is undesirable since it may lead to filtration blocking. In this case, when eliminating the factors contributing to air entrapment, the released air may lift through the central part of the filter material. This in its turn may lead to that a water cannot come to the areas in which there is an air thus the filter material will remain dry.

It has previously been proposed a filter cartridge filled with a filter material formed as an opened glass which is closed with a cover from above having lateral walls and a bottom closed at least with one water-proof material. To increase a flow surface, bottom of the cartridge is formed from a water-proof material reached up to the external edge of the lateral walls and made from fibers of a small diameter providing the possibility of using a powder filter material. All area between external and internal walls along the bottom circumference presents a composite from a polymer and water-proof material. Water-proof material is made from polyester fibers or polyolefin fibers or polyamide fibers, or micro fibers. Bottom of the cartridge can be formed with the stiffening ribs (application PCT/RU2009/000100, B01D 27/00, publishes 03.12.2009 - prototype of the removable filter module; RU patent No.2383382, B01D 27/00, B29C 45/14, published 10.03.2010 Gazette No.7). Constructive version of the cartridge if allows using fine dispersive and powder filter materials, for example, activated carbon or ion-exchange resins, but in great quantities this can lead to increasing hydraulic resistance of liquid, i.e. to decreasing the liquid filtration rate. Besides, the great enough quantity of fine dispersive material can make difficult air exit from the cartridge, i.e. can lead to decreasing of its purification efficiency. To eliminate these drawbacks, a new construction of the filter module was created.

### SUMMARY OF THE INVENTION

The general object of the inventions group and required technical effect achieved in using the inventions is increasing the rate of the liquid filtration at the expense of increasing the area of the outlet opening (flow surface) and ensuring the possibility of removing (providing the exit) of air from the filter material with simultaneous increasing the efficiency of the liquid purification.

The proposed object and required technical effect in using the inventions is achieved by that in the removable filter module consisting of an upper part comprising a cover with at least one inlet opening for liquid to enter and air to exit and a lower part in the form of a housing filled with a filter material, and a bottom with at least one outlet opening, according to the invention the lower part of the module has a varying filtration cross section in the transverse and axial directions, said varying cross section providing a pressure drop and being formed by the configuration of the bottom of the module, said module having a base, at least two lateral walls formed with an incline with respect to the central axis of the module, and at least one upper surface which protrudes in the direction towards the cover and has at least one outlet opening, and by that the bottom surface is formed from at least one water-proof thin-wall material, and by that the outlet openings of the bottom surface are formed during manufacturing of the housing (module) from the melted polymer material, and by that the filter material disposed in the area of central axis of the module is situated at a height h₁ in respect to the upper surface of the bottom protruding in the direction towards the cover, and a filter material disposed by the lateral walls of the housing is situated at a height h₂ in respect to the base of the bottom, wherein h₂ > h₁, and in that the module bottom is additionally configured with the stiffening ribs following the configuration of the module bottom, and by that the outlet openings are disposed in the central upper section and at least one of the lateral sections of the bottom surface, and by that the outlet openings are disposed all over the bottom surface, and by that outlet openings have a maximum area, and by that the area of the outlet openings constitutes more than 70% of the common area of the module bottom, preferably constitutes 80% of the common area of the module bottom.

The device for purifying a liquid comprises a collecting vessel for the liquid to be purified, a vessel for the purified liquid and a removable filter module described above.

A removable filter module can be used both as a component for purifying a liquid and independently.

### BRIEF DESCRIPTION OF THE DRAWINGS

Subject matter of the invention is explained by the drawings.
Fig.1 shows a general view of the cross section in the transverse and axial directions of the removable filter module.
Fig.2 shows a general view of the cross section in the transverse direction, a top view and a bottom view of the filter module in which the bottom surface is formed at least from one water-proof thin-wall material, and the outlet openings are provided with the stiffening ribs additionally.
Fig.3 shows a general view of the cross section in the transverse direction, a bottom view of the filter module in which the outlet openings are formed during manufacturing of the module from the melted polymer material and disposed all over the bottom surface.
Fig.4 shows a general view of the jug-type device for purifying a liquid with a filter module inside.

### IMPLEMENTATION OF THE INVENTION

The essential feature of the claimed filter module is a configuration of the module bottom which forms a varying filtration cross section in the transverse and axial directions. This configuration provides a pressure drop and allows increasing a flow surface in the result of increasing the total flow section which gives in comparison with usual modules the possibility of using in the claimed module the greater quantity of the fine disperse filter materials, i.e., allows increasing a degree of purification of the liquid to be purified with simultaneous increasing the liquid filtration rate at the expense of providing air exit from the lateral walls of the housing and a base of the module bottom along the bottom surface protruding towards a cover to the central axis of the module.

The filter module consists of an upper part 1 and a lower part 2.

The upper part 1 of the removable filter module consists of the cover 4 with at least one inlet opening 5 for liquid to enter and air to exit (Fig.2). The upper part 1 of the module can comprise additionally an input filter (not shown in the drawings) consisting of a polymer material and a base (ring) connected together for example by thermal welding, mechanically fixed in the housing or in the cover. In one embodiment of the invention, the input filter can be additionally provided with the stiffening ribs. The stiffening ribs allow giving the reliability to the construction for the great dimensions of the input filter. In another embodiment of the invention, the input filter can be additionally provided with at least one valve. Said valve assists in additionally avoiding interruption of the liquid filtration which can occur in the result of air accumulated in the module. As a polymer material from which the input filter is made, fabric or non-fabric material, film, non-porous film of 5 to 100 micron or porous polymer material of 5 to 500 micron can be used.

The lower part 2 includes a housing 3 filled with a filter material 7 and the bottom 8 with at least one outlet opening 9 (Fig.1). The bottom 8 has a base 10 and at least two lateral walls 11 formed with an incline in respect to the central axis of the module. The upper surface 12 of the bottom 8 protruding towards the cover 4, base 10 and lateral walls 11 of the bottom 8 form the configuration of module bottom 8.

For increasing the liquid filtration rate at the expense of increasing the flow surface, the bottom 8 of the filter module is formed with at least one surface 12 protruding towards the cover 4 (Fig.1).

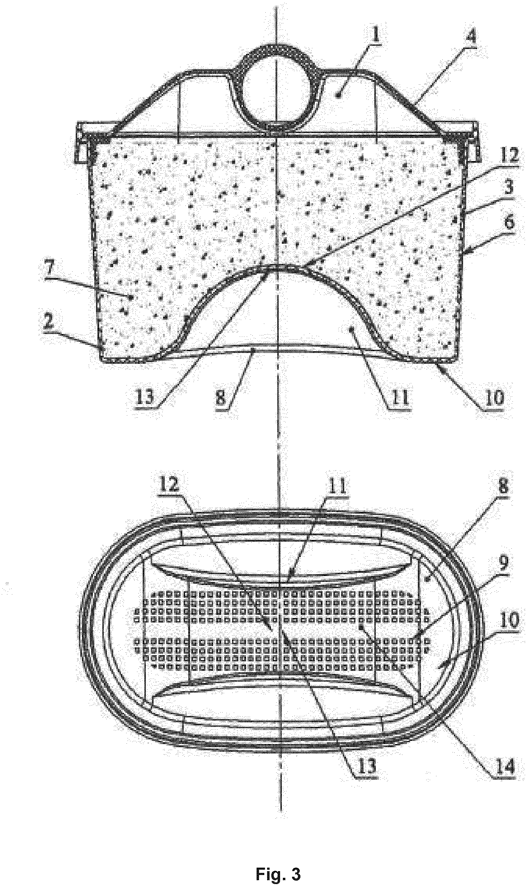

To achieve the uniformity of a liquid flowing during filtration at the expense of providing motion of the liquid to be filtered at least one outlet opening 9 for the purified liquid to exit is disposed in the central upper section 13 and in at least one of the lateral sections 14 of the bottom 8 surface 12. The outlet openings 9 can dispose all over the surface 12 of the bottom 8 (Fig.3) wherein the outlet openings 9 have a maximum area (maximum total area) in respect to the common area of the surface 12 of the module bottom 8. Motion of the liquid to be filtered is provided mainly in the direction from the central part of the module to its edges. This allows decreasing the probability of appearing local dry areas in the volume of the filter material 7 and at the same time providing a desirable time of a liquid presence within the module required for its effective purification.

The upper surface 12 of the bottom 8 protruding towards the cover 4 can be formed of at least one water-proof thin-wall material connected with the base 10 and lateral walls 11 of the bottom 8, for example, by thermal welding, wherein the bottom 8 of the module can be additionally configured with the stiffening ribs 15 following the configuration of the module bottom 8 (Fig. 2). The enumerated elements are molded technologically from the same material, for example, from polypropylene by injection molding, wherein the outlet openings 9 of the bottom 8 surface 12 will be formed during manufacturing of the module from the melted polypropylene. In this case the module bottom 8 also can be additionally configured with the stiffening ribs 15 following the configuration of the module bottom 8 (not shown in drawings).

In the process of filtration as a liquid flows through the filter material 7, dissolved in water gases give off. As a rule, a part of air (air bubbles) remains in the volume of a sorbent preventing effective flowing of a liquid through the filter material thereby decreasing the liquid filtration rate. In the claimed filter module the lateral walls 11 of the bottom 8 are inclined to the central axis of the module. In the moment of a liquid filtration when swelling the filter material 7 and passing air accumulated between the particles of the filter material 7 and expelled by a liquid, motion of air (air bubbles) at the expense of incline of the lateral walls 11 will be oriented into the central part of the module towards upwards to the outlet openings 5 in the cover 4. Air bubbles rising in water in natural manner due to their lesser density from the lateral walls 6 of the housing 3 and from the base 10 of the bottom 8 to the central axis of the module along the surface 12 of the bottom 8 protruding towards the cover 4, can for the most part or completely leave the filter module through the outlet openings 5 in the cover 4 (Fig. 2). Thus, configuration of the module bottom 8 allows avoiding interruption of the liquid filtration which occurs at the expense of accumulation of air in the volume of the filter material, i.e. assists in effective flowing of a liquid through the filter material.

As mentioned above, in one embodiment of the invention the outlet openings 9 of the bottom 8 can be formed during manufacturing of the housing 3 (module) from the melted polymer material, fixed technologically on the base 10 and lateral walls 11 of the bottom 8, wherein the outlet openings 9 will be disposed all over the bottom surface (Fig. 3). In another embodiment of the invention, the bottom 8 is formed from at least one water-proof thin-wall material, and then the area of the outlet openings will constitute more than 70% of the common area of the module bottom 8, preferably constitutes 80% of the common area of the module bottom 8. Stiffening ribs 15, if any, will occupy the minimum area respectively (Fig. 2).

Form of the bottom 8 surface 12 protruding towards the cover 4 is determined by the particular manufacturing technology and may be any, for example, presents in cross section both in the transverse and axial directions rectangular, elliptic, stepwise or any other form, mainly elliptic or rectangular.

The outlet openings 9 can be additionally disposed in the base 10 of the bottom 8.

The upper surface 12 of the bottom 8 protruding towards the cover 4 determines the heights h₂ and h₁, namely, the filter material 7 disposed in the area of the central axis of the module, is situated at a height h₁ in respect to the upper surface 12 of the bottom 8 protruding towards the cover 4, and the filter material 7 disposed by the lateral walls 6 of the housing 3 is situated at a height h₂ in respect to the base 10 of the bottom 8, wherein h₂ > h₁ (Figs. 1, 2). Heights h₂ and h₁ are determined experimentally taking in consideration the composition of the filter material 7. They provide a pressure drop required for breaking away (in natural manner) of the air bubbles and air withdrawal from the module with the filter material. Liquid pressure in the central upper section 13 of the surface 12 of the bottom 8 will be lower than a pressure in the lateral sections 14 of the surface 12 of the bottom 8, in the result of which hydraulic resistance in the central part (in the area of the central axis) of the module will be the least one. This facilitates exit of air which can be delayed in the volume of the filter material as a liquid is filtrated through an area of the central axis of the module upwards to outlet openings 5 in the cover 4. As mentioned above, heights h₂ and h₁ depends on the composition of the filter material used in the module, but not on its quantity as the module housing for example can be extended in cross-section in the essential embodiment. Thus, it will have the least height than usual filter module, but at the expense of its extending along the transverse direction it will be able to accommodate the greater quantity of a filter material in its housing at the preset height.

Fine-disperse filter materials in particular fibrous and/or non-coherent materials or their mixtures can be used as a filter material. For example, activated carbon granular particles (activated granular carbon) and/or ion-exchange polymer granules (ion-exchange resin) and powder particles with size less than 50µ (activated powder carbon with size of the particles of 20 µ and less) or/and fibrous particles with the fibers less than 50µ in diameter (ion-exchange fibers, for example, ion-exchange polyacrilic fibers with the fibers 15-20 µ in diameter.

The filter module can be made on the acting equipment, for example, injection molding machine for thermoplastic materials of B 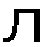 -40 type, for example from polypropylene.

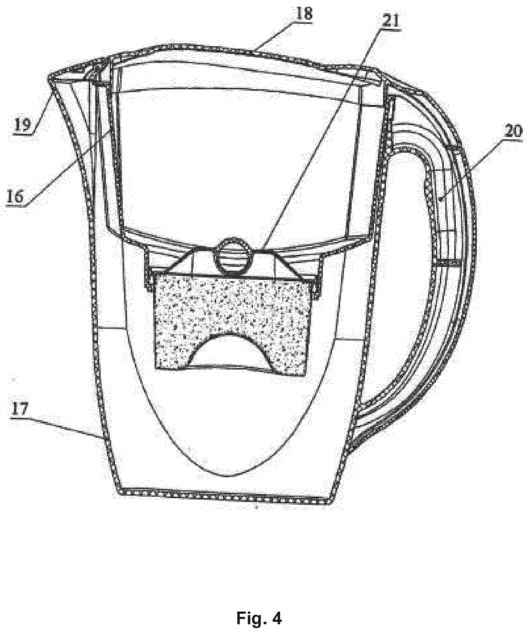

The device for purifying a liquid shown in Fig.4 consists of a collecting vessel 16 for the liquid to be purified, filtration means 21, a vessel 17 for the purified liquid with a pouring element 19, cover 18 and a handle 20. As a filtration means 21 they use the claimed removable filter module which presents an easily replaceable removable construction.

The specific dimensions and separate constructive parameters of implementation of the filter module and device for purifying a liquid can be selected by the specialists depending on the purpose and efficiency of the device.

Practically any known materials and materials used in the devices for purification a liquid, as well the known assembly techniques, can be used as constructive materials.

The filter module intended for using in the filters for purifying a liquid and the device for purifying a liquid function as follows.

The filter for purifying a liquid for example of jug type consists of a collecting vessel 16 for the liquid to be purified (a funnel for the liquid to be purified), a vessel 17 for the purified liquid and filtration means 21 in the form of the removable filter module. The filter module is inserted into the opening of the collecting vessel 16 for the liquid to be purified. A liquid coming to the module for purification is filtered through the module.

Unpurified liquid comes inside the filter module through openings in the cover. At the expense of the module bottom configuration which forms a varying filtration cross-section in the transverse and axial directions, and existence of at least one outlet opening in the upper surface of the bottom protruding towards the cover, motion of a liquid coming for filtration is carried out essentially in the direction from the central part of the module to its edges. This decreases the probability of occurring the local dry sections in the volume of the filter material and providing the desired time of a liquid presence in the volume of the filter material required for its effective purification.

In the process of filtration as a liquid flows through the filter material 7, dissolved in water gases give off. The varying filtration cross-section provides a pressure drop required for breaking away (in natural manner) of the air bubbles and air withdrawal from the module with the filter material. Liquid pressure in the central upper section 13 of the surface 12 of the bottom 8 will be lower than a pressure in the lateral sections 14 of the surface 12 of the bottom 8, in the result of which hydraulic resistance in the central part (in the area of the central axis) of the module will be the least one. This facilitates exit of air which can be delayed in the volume of the filter material as a liquid is filtrated through an area of the central axis of the module upwards to outlet openings 5 in the cover 4.

A liquid flows out purified from various contaminations through the opening in the central section of the bottom surface and at least one opening in the lateral section of the bottom surface. The purified liquid comes to a vessel 17 for the purified water.

Thus, the set of the essential features, namely, the varying effective section of module lower part formed by the bottom configuration having at least one upper surface protruding towards the cover with at least one outlet opening provides increasing of the flowing surface in the result of increasing the total flow section which gives in comparison with usual modules the possibility of using in the claimed module the greater quantity of the fine disperse filter materials, i.e., allows to increase a degree of purification of the liquid to be purified with simultaneous increasing the liquid filtration rate at the expense of providing air exit from the module.

## Claims

1. Filter module consisting of
an upper part (1) comprising a cover (4) with at least one inlet opening (5) for liquid to enter and air to exit and
a lower part (2) in the form of a housing (3) filled with a filter material (7), and a bottom (8) with at least one outlet opening (9),
**characterized in that** the lower part (2) of the module has
a varying filtration cross section in the transverse and axial directions, providing a pressure drop and being formed by the configuration of the module bottom having a base (10),
a t least two lateral walls (11) formed with an incline in respect to the central axis of the module, and
a t least one upper surface (12) protruding in the direction towards the cover (4) with the at least one outlet opening (9),
whereby the upper surface (12) of the bottom (8) protruding towards the cover (4) has an elliptic or rectangular section.

2. Filter module according to claim 1,
**characterized in that**
the bottom (8) surface (12) is formed from at least one water-proof thin-wall material.

3. Filter module according to claim 1,
**characterized in that**
the outlet openings (9) of the bottom (8) surface (12) are formed during manufacturing of the housing (module) (3) from the melted polymer material.

4. Filter module according to claim 1,
**characterized in that**
the filter material (7) disposed in the area of the central axis of the module, is situated at a height h₁ in respect to the upper surface (12) of the bottom (8) protruding towards the cover (4), and the filter material (7) disposed by the lateral walls (11) of the housing (3) is situated at a height h₂ in respect to the base (10) of the bottom (8), wherein h₂ > h₁.

5. Filter module according to claims 2 and 3,
**characterized in that**
the module bottom (8) is additionally configured with the stiffening ribs (15) following the configuration of the module bottom (8).

6. Filter module according to claim 5,
**characterized in that**
the outlet openings (9) are disposed in the central upper section (13) and at least in one of the lateral sections (14) of the bottom (8) surface (12).

7. Filter module according to claim 5,
**characterized in that**
the outlet openings (9) are disposed all over the bottom (8) surface (12).

8. Filter module according to claims 6 and 7,
**characterized in that**
the outlet openings (9) have the maximum area.

9. Filter module according to claim 8,
**characterized in that**
the area of the outlet openings (9) constitutes more than 70% of the common area of the module bottom (8), preferably constitutes 80% of the common area of the module bottom (8).

10. A device for purifying a liquid comprising a collecting vessel for a liquid to be purified, filtration means and a vessel for the purified liquid
**characterized in that**
the filter module according to any of claims 1 to 9 is the filtration means.

## Patentansprüche

1. Filtermodul bestehend aus
einem oberen Teil (1), der eine Abdeckung (4) mit mindestens einer Einlassöffnung (5) aufweist, damit Flüssigkeit eintritt und Luft austritt, und
einem unteren Teil (2) in der Form eines Gehäuses (3), das mit einem Filtermaterial (7) gefüllt ist, und einem Boden (8) mit mindestens einer Auslassöffnung (9),
**dadurch gekennzeichnet, dass**
der untere Teil (2) des Moduls
einen in Querrichtung und axialer Richtung veränderlichen Filtrierquerschnitt aufweist, der einen Druckabfall bewirkt und durch die Gestalt des Modulbodens mit einer Grundfläche (10) gebildet wird,
mindestens zwei Seitenwänden (11), die mit einer Neigung bezüglich der Mittelachse des Moduls ausgebildet sind, und
mindestens einer oberen Fläche (12), die in Richtung zu der Abdeckung (4) hin mit der mindestens einen Auslassöffnung (9) hervorsteht,
wodurch die obere Fläche (12) des Bodens (8), die zu der Abdeckung (4) hin hervorsteht, einen elliptischen oder rechteckigen Querschnitt aufweist.

2. Filtermodul nach Anspruch 1,
**dadurch gekennzeichnet, dass**
die Fläche (12) des Bodens (8) aus mindestens einem wasserdichten, dünnwandigen Werkstoff gebildet ist.

3. Filtermodul nach Anspruch 1,
**dadurch gekennzeichnet, dass** die Auslassöffnungen (9) der Fläche (12) des Bodens (8) während der Herstellung des Gehäuses (Modul) (3) aus dem geschmolzenen Polymerwerkstoff gebildet werden.

4. Filtermodul nach Anspruch 1,
**dadurch gekennzeichnet, dass**
das Filtermaterial (7) im Bereich der Mittelachse des Moduls angeordnet ist, in einer Höhe h₁ bezüglich der oberen Fläche (12) des Bodens (8) liegt, die zu der Abdeckung (4) hin hervorsteht, und das durch die Seitenwände (11) des Gehäuses (3) angeordnete Filtermaterial (7) in einer Höhe h₂ bezüglich der Grundfläche (10) des Bodens (8) liegt, wobei h₂ > h₁ ist.

5. Filtermodul nach den Ansprüchen 2 und 3,
**dadurch gekennzeichnet, dass**
der Modulboden (8) zusätzlich mit den Versteifungsrippen (15) ausgeführt wird, die sich an die Gestaltung des Modulbodens (8) anschließen.

6. Filtermodul nach Anspruch 5,
**dadurch gekennzeichnet, dass**
Auslassöffnungen (9) im mittleren oberen Abschnitt (13) und mindestens in einem der seitlichen Abschnitte (14) der Fläche (12) des Bodens (8) angeordnet sind.

7. Filtermodul nach Anspruch 5,
**dadurch gekennzeichnet, dass**
die Auslassöffnungen (9) über die ganze Fläche (12) des Bodens (8) angeordnet sind.

8. Filtermodul nach den Ansprüchen 6 und 7,
**dadurch gekennzeichnet, dass**
die Auslassöffnungen (9) die maximale Fläche besitzen.

9. Filtermodul nach Anspruch 8,
**dadurch gekennzeichnet, dass**
die Fläche der Auslassöffnungen (9) mehr als 70% der gemeinsamen Fläche des Modulbodens (8) bildet, vorzugsweise 80% der gemeinsamen Fläche des Modulbodens (8) bildet.

10. Vorrichtung zur Reinigung einer Flüssigkeit, die einen Sammelbehälter für eine
zu reinigende Flüssigkeit, Filtriereinrichtungen und einen Behälter für die gereinigte Flüssigkeit umfasst,
**dadurch gekennzeichnet, dass**
das Filtermodul nach einem der Ansprüche 1 bis 9 die Filtriereinrichtung ist.

## Revendications

1. Module filtrant consistant en
une partie supérieure (1) comprenant un couvercle (4) avec au moins une ouverture d'entrée (5) pour faire entrer un liquide et sortir de l'air et
une partie inférieure (2) sous forme d'un boîtier (3) rempli d'un matériau filtrant (7) et d'un fond (8) avec au moins une ouverture de sortie (9),
**caractérisé en ce que**
la partie inférieure (2) du module a
une section transversale de filtration variable dans les directions transversale et axiale, assurant une chute de pression et étant formée par la configuration du fond du module qui a une base (10),
au moins deux parois latérales (11) formées avec une inclinaison par rapport à l'axe central du module, et
au moins une surface supérieure (12) se projetant en direction du couvercle (4) avec ladite au moins une ouverture de sortie (9),
dans lequel la surface supérieure (12) du fond (8) se projetant en direction du couvercle (4) a une section elliptique ou rectangulaire.

2. Module filtrant selon la revendication 1,
**caractérisé en ce que**
la surface (12) du fond (8) est formée à partir d'au moins un matériau à paroi mince étanche à l'eau.

3. Module filtrant selon la revendication 1,
**caractérisé en ce que**
les ouvertures de sortie (9) de la surface (12) du fond (8) sont formées pendant la fabrication du boîtier (module) (3) à partir d'un matériau polymère fondu.

4. Module filtrant selon la revendication 1,
**caractérisé en ce que**
le matériau filtrant (7) agencé dans la zone de l'axe central du module est situé à une hauteur h₁ par rapport à la surface supérieure (12) du fond (8) se projetant en direction du couvercle (4), et le matériau filtrant (7) agencé au niveau des parois latérales (11) du boîtier (3) est situé à une hauteur h₂ par rapport à la base (10) du fond (8), dans lequel h₂ > h₁.

5. Module filtrant selon les revendications 2 et 3,
**caractérisé en ce que**
le fond du module (8) est additionnellement configuré avec des nervures de renforcement (15) suivant la configuration du fond du module (8).

6. Module filtrant selon la revendication 5,
**caractérisé en ce que**
les ouvertures de sortie (9) sont disposées dans la section supérieure centrale (13) et au moins une des sections latérales (14) de la surface (12) du fond (8).

7. Module filtrant selon la revendication 5,
**caractérisé en ce que**
les ouvertures de sortie (9) sont agencées sur toute la surface (12) du fond (8).

8. Module filtrant selon les revendications 6 et 7,
**caractérisé en ce que**
les ouvertures de sortie (9) ont la superficie maximum.

9. Module filtrant selon la revendication 8,
**caractérisé en ce que**
la superficie des ouvertures de sortie (9) constitue plus de 70 % de la superficie commune du fond (8) du module, de préférence constitue 80 % de la superficie commune du fond (8) du module.

10. Dispositif de purification d'un liquide comprenant un récipient collecteur pour un liquide à purifier, un moyen de filtration et un récipient pour le liquide purifié
**caractérisé en ce que**
le module filtrant selon l'une quelconque des revendications 1 à 9 est le moyen de filtration.
